# EUROPEAN PATENT APPLICATION

(11) **EP 4 694 520 A1**
(43) Date of publication of application: **11.02.2026**
(21) Application number: 24784400.4
(22) Date of filing: 03.04.2024
(51) Int. Cl.: H04W 74/00, H04W 74/08, H04W 72/0446, H04W 72/0453

(54) **COMMUNICATION METHOD, AND APPARATUS**

(30) Priority: 07.04.2023 CN 202310395034
(71) Applicant: Huawei Technologies Co., Ltd., Shenzhen, Guangdong 518129 (CN)
(72) Inventor: HAN, Chengcheng, Shenzhen, Guangdong 518129 (CN); GUO, Zhiheng, Shenzhen, Guangdong 518129 (CN); LONG, Yi, Shenzhen, Guangdong 518129 (CN); XIE, Xinqian, Shenzhen, Guangdong 518129 (CN)
(74) Representative: Pfenning, Meinig & Partner mbB
(86) International application number: PCT/CN2024/085990
(87) International publication number: WO 2024/208318

(57) **Abstract**

A communication method and apparatus are provided, to enhance a coverage capability of a PRACH and improve random access performance. A terminal device receives first information from a network device, where the first information indicates a time-frequency position of a first PRACH resource, the first PRACH resource includes at least one RO group, and the terminal device determines one RO group in the at least one RO group to transmit a preamble with repetitions. Any RO in the at least one RO group is an RO that is capable of being used to transmit a preamble, a quantity of SSB indexes included in a union set of a first index set corresponding to the at least one RO group and a second index set corresponding to a first RO is less than or equal to a first threshold, the first index set is an SSB index associated with an RO that is at a first time domain position and that is in the at least one RO group, the second index set is an SSB index associated with the first RO at the first time domain position, and the first RO is an RO used to transmit a preamble without repetitions.

## Description

### CROSS-REFERENCE TO RELATED APPLICATIONS

This application claims priority to Chinese Patent Application No. 202310395034.4, filed with the China National Intellectual Property Administration on April 7, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a random access process of a terminal device, the terminal device sends a preamble (preamble) through a message 1 (message 1, msg1). Specifically, the terminal device may send the preamble on a random access channel occasion (random access channel occasion, RO) associated with an index of a selected synchronization signal and physical broadcast channel block (synchronization signal and physical broadcast channel block, SSB). The preamble is carried on a physical random access channel (physical random access channel, PRACH).

To enhance a coverage capability of the PRACH, a network device may add a PRACH resource, and define an RO group (group), so that the terminal device sends a preamble with repetitions in a time division manner, to increase receive power of the network device and improve coverage. However, because uplink resources are limited, a new PRACH and a legacy PRACH may overlap in time domain. When different SSBs are mapped to PRACHs overlapping in time domain and a quantity of the different SSBs that are mapped exceeds a quantity of analog beams generated by the network device, the network device can generate only some beams, receive and detect, only in a direction of the generated beam, a PRACH sent by the terminal device, and cannot receive and detect a PRACH sent by the terminal device in a direction of a beam that is not generated. Consequently, overlapping RO resources cannot be actually used for PRACH transmission with repetitions. In other words, this causes invalidity of the newly added ROs, reduces an actual PRACH transmission number, and impairs coverage performance.

### SUMMARY

This application provides a communication method and apparatus, to enhance a coverage capability of a PRACH and improve random access performance.

According to a first aspect, this application provides a communication method. The method may be applied to a terminal device or a processor, a chip, or a functional module in the terminal device. For example, the method is applied to a terminal device. The method may include: The terminal device receives first information from a network device, where the first information indicates a time-frequency position of a first PRACH resource, the first PRACH resource includes at least one RO group; and the terminal device determines one RO group from the at least one RO group, and transmits a preamble with repetitions based on the RO group, where the at least one RO group is for transmitting a preamble with repetitions, any RO in the at least one RO group is an RO that is capable of being used to transmit a preamble, a quantity of synchronization signal and physical broadcast channel block SSB indexes included in a union set of a first index set corresponding to the at least one RO group and a second index set corresponding to a first RO is less than or equal to a first threshold, the first index set is an SSB index associated with an RO that is at a first time domain position and that is in the at least one RO group, the second index set is an SSB index associated with the first RO at the first time domain position, and the first RO is an RO used to transmit a preamble without repetitions.

According to the foregoing communication method, all ROs included in the at least one RO group are ROs that can actually transmit a preamble. To be specific, the network device may receive and detect, on these ROs, the preamble sent by the terminal device, so that an actual transmission number that is of the preamble and that is used by the RO group selected by the terminal device does not decrease, a coverage capability of the PRACH can be improved, and random access performance can be improved.

In a possible design, the first threshold is a quantity of SSBs corresponding to the first RO or the at least one RO group at the first time domain position; or the first threshold is a quantity of SSB beams that are used by the network device to receive a preamble at the first time domain position; or the first threshold is predefined; or the first threshold is configured by the network device. In this way, the first threshold may be flexibly determined, so that the at least one RO group can be accurately determined based on the first threshold.

In a possible design, a first RO group is for transmitting a preamble for a first repetition number, where a quantity of ROs included in the first RO group is a positive integer multiple of the first repetition number, the first RO group is any RO group in the at least one RO group, and the first repetition number is one of a plurality of repetition numbers configured by the network device. In this way, only a small amount of signaling is required, or it is convenient to predefine and indicate which ROs in the RO group are used by the terminal device to transmit the preamble.

In a possible design, a repetition number used by the terminal device to transmit the preamble in the RO group is the same as a repetition number used by the RO group to transmit the preamble. In this way, there is no need to indicate which ROs in the RO group are used by the terminal device to transmit the preamble, so that indication overheads are reduced.

In a possible design, an RO belonging to a third RO group is included between two ROs in time domain in ROs included in a second RO group in the at least one RO group, the second RO group corresponds to a first SSB, and the third RO group corresponds to a second SSB; or no RO in another RO group exists between ROs included in any RO group in the at least one RO group. In this way, the ROs included in the RO group can be flexibly distributed.

In a possible design, ROs included in a fourth RO group and a fifth RO group are the same, and the fourth RO group and the fifth RO group correspond to a same repetition number of preambles and correspond to different SSBs. In this way, RO groups that meet a condition may share a same RO, so that resources are saved and a PRACH transmission delay is reduced.

In a possible design, at least one same RO exists in ROs included in a sixth RO group and ROs included in a seventh RO group in the at least one RO group, and a quantity of ROs included in the sixth RO group is different from a quantity of ROs included in the seventh RO group. In this way, RO groups that meet a condition may reuse an RO, so that resources are saved and a PRACH transmission delay is reduced.

According to a second aspect, this application provides a communication method. The method may be applied to a network device or a processor, a chip, or a functional module in the network device. For example, the method is applied to a network device. The method may include: The network device determines first information, and sends the first information to a terminal device. The first information indicates a time-frequency position of a first PRACH resource, the first PRACH resource includes at least one RO group, the at least one RO group is for transmitting a preamble with repetitions, any RO in the at least one RO group is an RO that is capable of being used to transmit a preamble, a quantity of synchronization signal and physical broadcast channel block SSB indexes included in a union set of a first index set corresponding to the at least one RO group and a second index set corresponding to a first RO is less than or equal to a first threshold, the first index set is an SSB index associated with an RO that is at a first time domain position and that is in the at least one RO group, the second index set is an SSB index associated with the first RO at the first time domain position, and the first RO is an RO used to transmit a preamble without repetitions.

According to the foregoing communication method, all ROs included in the at least one RO group are ROs that can actually transmit a preamble. To be specific, the network device may receive and detect, on these ROs, the preamble sent by the terminal device, so that an actual transmission number that is of the preamble and that is used by the RO group selected by the terminal device does not decrease, a coverage capability of the PRACH can be improved, and random access performance can be improved.

In a possible design, the first threshold is a quantity of SSBs corresponding to the first RO or the at least one RO group at the first time domain position; or the first threshold is a quantity of SSB beams that are used by the network device to receive a preamble at the first time domain position; or the first threshold is predefined; or the first threshold is configured by the network device. In this way, the first threshold may be flexibly determined, so that the at least one RO group can be accurately determined based on the first threshold.

In a possible design, a first RO group is for transmitting a preamble for a first repetition number, where a quantity of ROs included in the first RO group is a positive integer multiple of the first repetition number, the first RO group is any RO group in the at least one RO group, and the first repetition number is one of a plurality of repetition numbers configured by the network device. In this way, only a small amount of signaling is required, or it is convenient to predefine and indicate which ROs in the RO group are used by the terminal device to transmit the preamble.

In a possible design, an RO belonging to a third RO group is included between two ROs in time domain in ROs included in a second RO group in the at least one RO group, the second RO group corresponds to a first SSB, and the third RO group corresponds to a second SSB; or no RO in another RO group exists between ROs included in any RO group in the at least one RO group. In this way, the ROs included in the RO group can be flexibly distributed.

In a possible design, ROs included in a fourth RO group and a fifth RO group are the same, and the fourth RO group and the fifth RO group correspond to a same repetition number of preambles and correspond to different SSBs. In this way, RO groups that meet a condition may share a same RO, so that resources are saved and a PRACH transmission delay is reduced.

In a possible design, at least one same RO exists in ROs included in a sixth RO group and ROs included in a seventh RO group in the at least one RO group, and a quantity of ROs included in the sixth RO group is different from a quantity of ROs included in the seventh RO group. In this way, RO groups that meet a condition may reuse an RO, so that resources are saved and a PRACH transmission delay is reduced.

According to a third aspect, this application provides a communication method. The method may be applied to a terminal device or a processor, a chip, or a functional module in the terminal device. For example, the method is applied to a terminal device. The method may include: The terminal device receives first information from a network device, where the first information indicates a time-frequency position of a first PRACH resource, the first PRACH resource includes at least one RO group, the at least one RO group is for transmitting a preamble with repetitions, and any RO in the at least one RO group is an RO that is capable of being used to transmit a preamble; and the terminal device determines a valid RO group in the at least one RO group based on a first transmission number, a first proportion, or a first quantity that corresponds to any RO group in the at least one RO group, and the terminal device determines a target RO group from the valid RO group, and transmits a preamble with repetitions based on the target RO group, where the first transmission number is equal to a quantity of ROs that are capable of actually transmitting a preamble and that are in any RO group in the at least one RO group, the first proportion is a proportion of a second RO in one RO group, the first quantity is a quantity of second ROs in one RO group, and the second RO is an RO that is actually not used to transmit a preamble.

According to the foregoing communication method, the valid RO group is determined, so that a reduction range of an actual transmission number of a preamble can be limited, a PRACH coverage loss is reduced, and random access performance is improved.

In a possible design, the terminal device may determine an RO group in which a first transmission number is greater than or equal to a first number threshold in the at least one RO group as the valid RO group. In this way, the terminal device can accurately determine the valid RO group based on the first transmission number.

In a possible design, the terminal device may determine an RO group in which a proportion of the second RO in one RO group is less than or equal to the first proportion as the valid RO group. In this way, the terminal device can accurately determine the valid RO group based on the first proportion.

In a possible design, the terminal device determines an RO group in which a proportion of an RO that is capable of actually transmitting a preamble in one RO group is greater than or equal to a second proportion as the valid RO group, where the second proportion is equal to 1 minus the first proportion. In this way, the terminal device can accurately determine the valid RO group based on the first proportion.

In a possible design, the terminal device may determine an RO group in which a quantity of second ROs in one RO group is less than or equal to the first quantity as the valid RO group. In this way, the terminal device can accurately determine the valid RO group based on the first quantity.

In a possible design, the first number threshold is less than or equal to a first repetition number of a preamble of the terminal device, and the first repetition number is any one of a plurality of repetition numbers configured by the network device. In this way, the terminal device can accurately determine the first number threshold corresponding to the first repetition number, to accurately determine the valid RO group.

In a possible design, when an actual transmission number of an eighth RO group is less than a second number threshold and is greater than or equal to a third number threshold, the eighth RO group is not capable of being used by the terminal device to transmit a preamble with repetitions for a second repetition number, but is capable of being used by the terminal device to transmit a preamble with repetitions for a third repetition number, where the second number threshold is less than or equal to the second repetition number, the third number threshold is less than or equal to the third repetition number, the second repetition number is greater than the third repetition number, the second repetition number is one of the plurality of repetition numbers configured by the network device, and the third repetition number is one of the plurality of repetition numbers configured by the network device. In this way, an RO group that cannot be used at a high repetition level may be applied to a low repetition level, so that resource utilization is improved.

In a possible design, an RO belonging to a third RO group is included between two ROs in time domain in ROs included in a second RO group in the at least one RO group, the second RO group corresponds to a first SSB, and the third RO group corresponds to a second SSB; or no RO in another RO group exists between ROs included in any RO group in the at least one RO group. In this way, the ROs included in the RO group can be flexibly distributed.

In a possible design, ROs included in a fourth RO group and a fifth RO group are the same, and the fourth RO group and the fifth RO group correspond to a same repetition number of preambles and correspond to different SSBs. In this way, RO groups that meet a condition may share a same RO, so that resources are saved and a PRACH transmission delay is reduced.

In a possible design, at least one same RO exists in ROs included in a sixth RO group and ROs included in a seventh RO group in the at least one RO group, and a quantity of ROs included in the sixth RO group is different from a quantity of ROs included in the seventh RO group. In this way, RO groups that meet a condition may reuse an RO, so that resources are saved and a PRACH transmission delay is reduced.

In a possible design, a quantity of ROs included in the target RO group is greater than or equal to a repetition number that is of a preamble and that is currently calculated by the terminal device; or when the terminal device transmits a preamble with repetitions in the target RO group at power less than or equal to maximum transmission power, receive power of the preamble is greater than or equal to a first power threshold. In this way, an access probability of random access can be increased.

According to a fourth aspect, this application provides a communication method. The method may be applied to a network device or a processor, a chip, or a functional module in the network device. For example, the method is applied to a network device. The method may include: The network device determines first information, and sends the first information to a terminal device, where the first information indicates a time-frequency position of a first physical random access channel PRACH resource, the first PRACH resource includes at least one random access channel occasion RO group, the at least one RO group is for transmitting a preamble with repetitions, and any RO in the at least one RO group is an RO that is capable of being used to transmit a preamble. The network device determines a valid RO group in the at least one RO group based on a first transmission number, a first proportion, or a first quantity that corresponds to any RO group in the at least one RO group, and detects a preamble on the valid RO group, where the first transmission number is equal to a quantity of ROs that are capable of actually transmitting a preamble and that are in any RO group in the at least one RO group, the first proportion is a proportion of a second RO in one RO group, the first quantity is a quantity of second ROs in one RO group, and the second RO is an RO that is actually not used to transmit a preamble.

According to the foregoing communication method, the valid RO group is determined, so that a reduction range of an actual transmission number of a preamble can be limited, a PRACH coverage loss is reduced, and random access performance is improved.

In a possible design, the network device may determine an RO group in which a first transmission number is greater than or equal to a first number threshold in the at least one RO group as the valid RO group. In this way, the network device can accurately determine the valid RO group based on the first transmission number.

In a possible design, the network device determines an RO group in which a proportion of the second RO in one RO group is less than or equal to the first proportion as the valid RO group. In this way, the network device can accurately determine the valid RO group based on the first proportion.

In a possible design, the network device determines an RO group in which a proportion of an RO that is capable of actually transmitting a preamble in one RO group is greater than or equal to a second proportion as the valid RO group, where the second proportion is equal to 1 minus the first proportion. In this way, the network device can accurately determine the valid RO group based on the first proportion.

In a possible design, network device determines an RO group in which a quantity of second ROs in one RO group is less than or equal to the first quantity as the valid RO group. In this way, the network device can accurately determine the valid RO group based on the first quantity.

In a possible design, the first number threshold is less than or equal to a first repetition number of a preamble of the terminal device, and the first repetition number is any one of a plurality of repetition numbers configured by the network device. In this way, the network device can accurately determine the first number threshold corresponding to the first repetition number, to accurately determine the valid RO group.

In a possible design, when an actual transmission number of an eighth RO group is less than a second number threshold and is greater than or equal to a third number threshold, the eighth RO group is not capable of being used by the terminal device to transmit a preamble with repetitions for a second repetition number, but is capable of being used by the terminal device to transmit a preamble with repetitions for a third repetition number, where the second number threshold is less than or equal to the second repetition number, the third number threshold is less than or equal to the third repetition number, the second repetition number is greater than the third repetition number, the second repetition number is one of the plurality of repetition numbers configured by the network device, and the third repetition number is one of the plurality of repetition numbers configured by the network device. In this way, an RO group that cannot be used at a high repetition level may be applied to a low repetition level, so that resource utilization is improved.

In a possible design, an RO belonging to a third RO group is included between two ROs in time domain in ROs included in a second RO group in the at least one RO group, the second RO group corresponds to a first SSB, and the third RO group corresponds to a second SSB; or no RO in another RO group exists between ROs included in any RO group in the at least one RO group. In this way, the ROs included in the RO group can be flexibly distributed.

In a possible design, ROs included in a fourth RO group and a fifth RO group are the same, and the fourth RO group and the fifth RO group correspond to a same repetition number of preambles and correspond to different SSBs. In this way, RO groups that meet a condition may share a same RO, so that resources are saved and a PRACH transmission delay is reduced.

In a possible design, at least one same RO exists in ROs included in a sixth RO group and ROs included in a seventh RO group in the at least one RO group, and a quantity of ROs included in the sixth RO group is different from a quantity of ROs included in the seventh RO group. In this way, RO groups that meet a condition may reuse an RO, so that resources are saved and a PRACH transmission delay is reduced.

According to a fifth aspect, this application further provides a communication apparatus. The communication apparatus may be a terminal device, and the communication apparatus has a function of implementing the method according to the first aspect or the possible designs of the first aspect or the method according to the third aspect or the possible designs of the third aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. These units may perform corresponding functions in the first aspect or the possible designs of the first aspect, or the third aspect or the possible designs of the third aspect. For details, refer to detailed descriptions in the method examples. Details are not described herein again.

In a possible design, a structure of the communication apparatus includes a transceiver and a processor, and optionally further includes a memory. The transceiver is configured to: receive and send a signal, and is configured to: communicate and interact with another device in a communication system. The processor is configured to support the communication apparatus in performing a corresponding function in the first aspect or the possible designs of the first aspect, or the third aspect or the possible designs of the third aspect. The memory is coupled to the processor, and stores program instructions and data that are necessary for the communication apparatus.

According to a sixth aspect, this application further provides a communication apparatus. The communication apparatus may be a network device, and the communication apparatus has a function of implementing the method according to the second aspect or the possible designs of the second aspect or the method according to the fourth aspect or the possible designs of the fourth aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. These units may perform corresponding functions in the second aspect or the possible designs of the second aspect, or the fourth aspect or the possible designs of the fourth aspect. For details, refer to detailed descriptions in the method examples. Details are not described herein again.

In a possible design, a structure of the communication apparatus includes a transceiver and a processor, and optionally further includes a memory. The transceiver is configured to: receive and send a signal, and is configured to: communicate and interact with another device in a communication system. The processor is configured to support the communication apparatus in performing a corresponding function in the second aspect or the possible designs of the second aspect, or the fourth aspect or the possible designs of the fourth aspect. The memory is coupled to the processor, and stores program instructions and data that are necessary for the communication apparatus.

According to a seventh aspect, an embodiment of this application provides a communication system, and the communication system may include the terminal device, the network device, and the like mentioned above.

According to an eighth aspect, an embodiment of this application provides a computer-readable storage medium. The computer-readable storage medium stores program instructions. When the program instructions are run on a computer, the computer is enabled to perform the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect in embodiments of this application. For example, the computer-readable storage medium may be any usable medium accessible to the computer. By way of example but not limitation, the computer-readable medium may include a non-transitory computer-readable medium, a random access memory (random-access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a ninth aspect, an embodiment of this application provides a computer program product, including computer program code or instructions. When the computer program code or the instructions are run on a computer, the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect is performed.

According to a tenth aspect, this application further provides a chip, including a processor. The processor is coupled to a memory, and is configured to read and execute program instructions stored in the memory, so that the chip implements the method according to any one of the first aspect or the possible designs of the first aspect, any one of the second aspect or the possible designs of the second aspect, any one of the third aspect or the possible designs of the third aspect, or any one of the fourth aspect or the possible designs of the fourth aspect.

For each aspect in the fifth aspect to the tenth aspect and technical effects that may be achieved in each aspect, refer to descriptions of technical effects that may be achieved in any one of the first aspect or the possible solutions of the first aspect, any one of the second aspect or the possible solutions of the second aspect, any one of the third aspect or the possible solutions of the third aspect, or any one of the fourth aspect or the possible solutions of the fourth aspect. Details are not described herein again.

### BRIEF DESCRIPTION OF DRAWINGS

FIG. 1 is a diagram of an architecture of a communication system according to this application;
FIG. 2 is an example flowchart of random access according to this application;
FIG. 3 is a diagram of a time-frequency resource of a PRACH according to this application;
FIG. 4 is a diagram of a time-frequency position of a PRACH according to this application;
FIG. 5 is a diagram of a frequency domain position of a PRACH according to this application;
FIG. 6 is a diagram of an RO-SSB mapping relationship according to this application;
FIG. 7 is a diagram of another RO-SSB mapping relationship according to this application;
FIG. 8 is a diagram of RACH performance deterioration caused by an SSB beam conflict according to this application;
FIG. 9 is a flowchart of a communication method according to this application;
FIG. 10 is a diagram of ROs included in an RO group according to this application;
FIG. 11 is a diagram of an example in which a same RO exists between RO groups according to this application;
FIG. 12 is a diagram of another example in which a same RO exists between RO groups according to this application;
FIG. 13 is a diagram of another example in which a same RO exists between RO groups according to this application;
FIG. 14 is a flowchart of another communication method according to this application;
FIG. 15 is a diagram of a first transmission number according to this application;
FIG. 16 is a diagram of RO group reuse according to this application;
FIG. 17 is a diagram of a structure of a communication apparatus according to this application; and
FIG. 18 is a diagram of a structure of a communication apparatus according to this application.

### DESCRIPTION OF EMBODIMENTS

The following further describes in detail this application with reference to accompanying drawings.

Embodiments of this application provide a communication method and apparatus, to enhance a coverage capability of a PRACH and improve random access performance. The method and the apparatus in this application are based on a same technical concept. Because problem-resolving principles of the method and the apparatus are similar, mutual reference may be made to implementations of the apparatus and the method, and repeated parts are not described.

In the description of this application, words such as "first" and "second" are merely used for distinguishing between descriptions, and cannot be understood as an indication or implication of relative importance, or cannot be understood as an indication of implication of an order.

In the descriptions in this application, "at least one (type)" refers to one or more (types), and "a plurality of (types)" refers to two or more than two (types). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural.

In the description of this application, "and/or" describes an association relationship between associated objects, and indicates that three relationships may exist. For example, A and/or B may indicate the following cases: Only A exists, both A and B exist, and only B exists, where A and B may be singular or plural. "/" indicates "or". For example, a/b indicates a or b.

To describe the technical solutions in embodiments of this application more clearly, the following describes a communication method and apparatus provided in embodiments of this application in detail with reference to the accompanying drawings.

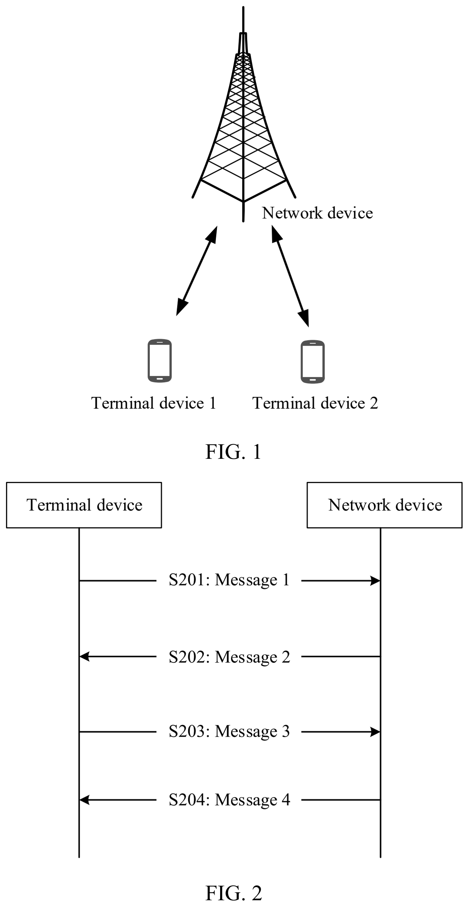

FIG. 1 shows a possible architecture of a communication system to which a communication method provided in this application is applicable. The communication system may include a network device and at least one terminal device. In FIG. 1, an example in which the communication system includes two terminal devices, for example, a terminal device 1 and a terminal device 2 shown in FIG. 1 is used for description.

Specifically, the network device may be a device that has wireless transceiver functions or a chip that can be disposed in the network device. The network device may include but is not limited to a gNB (generation NodeB, gNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), or the like. The network device may alternatively be a network node that constitutes a gNB or a transmission point, for example, a baseband unit (BBU), or a distributed unit (distributed unit, DU).

In some deployments, the gNB may include a central unit (central unit, CU) and a DU. The gNB may further include a radio frequency unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from information at the PHY layer. Therefore, in the architecture, higher layer signaling such as RRC layer signaling or PHCP layer signaling may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited.

The terminal device may also be referred to user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer with a wireless receiving and sending function, a virtual reality (virtual reality, VR) terminal device, an augmented reality (augmented reality, AR) terminal device, a wireless terminal in industrial control (industrial control), a wireless terminal of self-driving (self-driving), a wireless terminal in telemedicine (remote medical), a wireless terminal in a smart grid (smart grid), a wireless terminal in transportation safety (transportation safety), a wireless terminal in a smart city (smart city), a smart wearable device (such as smart glasses, a smart watch, and a smart headset), a wireless terminal in a smart home (smart home), and the like, or may be a chip, a chip module (or a chip system), or the like that can be disposed in the foregoing device. An application scenario is not limited in embodiments of this application. A terminal device with a wireless receiving/sending function and a chip that can be disposed in the terminal device are collectively referred to as the terminal device in this application.

In this application, the terminal device (for example, the terminal device 1 and the terminal device 2 in FIG. 1) may send an uplink preamble (preamble) to the network device, and the network device may send a downlink random access response (random access response, RAR) to the terminal device.

It should be noted that the communication system shown in FIG. 1 may be but is not limited to a 4th generation (4th Generation, 4G) system or a 5th generation (5th Generation, 5G) system, for example, a new radio access technology (new radio access technology, NR). Optionally, the method in embodiments of this application is further applicable to various future communication systems, for example, a 6th generation (6th Generation, 6G) system or another communication network.

It should be noted that a quantity and types of devices shown in the communication system shown in FIG. 1 are merely examples. There may be more devices in the communication system, for example, a core network device, which is not shown in FIG. 1.

With rapid development of a fifth-generation mobile communication technology 5G NR, a communication rate requirement of an enhanced mobile broadband (enhanced mobile broadband, eMBB) communication service continuously increases, a downlink peak rate needs to reach 20 Gbit/s or higher, and an uplink peak rate needs to reach 10 Gbit/s or higher. However, when only a channel capacity of a remaining available frequency band of sub (sub)-6 GHz is used, the rate requirement of the eMBB service cannot be met, where sub-6 GHz refers to a frequency band whose frequency is less than 6 GHz. According to the Shannon channel capacity formula, the simplest and most effective way to improve the channel capacity is to increase a spectrum bandwidth. However, a millimeter wave has abundant spectrum bandwidth resources, and a total of 76 GHz spectrum bandwidth resources are available. Therefore, the millimeter wave becomes a preferred extended frequency band of 5G.

Up to 19.25 GHz millimeter wave spectrum resources are available for 5G, which is about three times those of the bandwidth of the sub-6 GHz frequency band. Considering the abundant spectrum resources of the millimeter wave, the 3rd generation partnership project (3^{rd} generation partnership project, 3GPP) defines a larger sub-carrier spacing (sub-carrier spacing, SCS) and wider cell bandwidth for the millimeter wave than the sub-6 GHz frequency band, so that a peak rate of the millimeter wave is improved as much as possible. According to the 3GPP 38.104 protocol, the maximum SCS supported by the millimeter wave is 120 kHz, and the maximum SCS supported by a synchronization signal and physical broadcast channel block (synchronization signal and physical broadcast channel block, SSB) is 240 kHz, which is larger than that supported by sub-6 GHz. A larger SCS indicates a shorter transmission time interval (transmission time interval, TTI). For example, TTI duration of an SCS of 120 kHz is 1/4 of TTI duration of an SCS of 30 kHz. Therefore, millimeter wave communication is more advantageous in a short latency service. As defined in the 3GPP 38.104 protocol, the maximum cell bandwidth supported by the millimeter wave is 400 MHz, which is four times the maximum cell bandwidth (100 MHz) supported by sub-6 GHz.

In comparison with sub-6 GHz, millimeter-wave communication has different features and challenges. The millimeter wave has a high frequency and a short wavelength, and has good reflection performance, a large path loss, a large diffraction loss, and a large penetration loss. A phenomenon like absorption and scattering of rain, snow, and ice in the atmosphere has a great impact on a millimeter wave signal. In general, a main challenge of the millimeter wave is that a propagation loss in space is greater than that of sub-6 GHz. Especially, performance of the millimeter wave is more likely to be affected by a surrounding environment due to insufficient paths, insufficient diffraction capability, and insufficient penetration capability. To overcome the foregoing challenge, a feature of a short wavelength of the millimeter wave may be used, a transmit physical antenna and a receive physical antenna are made very small, and a small antenna spacing is set, so that a large quantity of antennas are integrated in a same antenna array area. In comparison with the sub-6 GHz frequency band, a quantity of physical antennas that can be integrated in the millimeter wave may increase significantly, and there may be hundreds or thousands of antennas. Based on a feature that a millimeter-wave base station can be integrated with a large quantity of physical antennas, a high-gain and adjustable beam can be obtained through beamforming (beamforming, BF), and limited power can be concentrated in a limited range for transmission, to improve signal coverage.

Although beamforming improves a coverage capability of the millimeter wave to some extent, a propagation loss of a radio signal in each beam still maintains the feature of the millimeter wave. In some cases, a signal needs to be sent with repetitions to ensure that a signal capability of a receive end is sufficient. For example, an edge terminal device needs to send a PRACH with repetitions to ensure that a network device completes RACH detection.

In a millimeter-wave communication system, a terminal device needs to obtain uplink synchronization through random access, and access a network for communication. Random access includes contention-based random access and contention-free random access. Non-contention-based access is usually performed when the terminal device can successfully receive radio resource control (radio resource control, RRC) signaling. The following describes a random access procedure by using a contention-based random access procedure as an example.

FIG. 2 is an example flowchart of random access, and the following operations may be included.

S201: A terminal device sends a message 1 (message 1, Msgl) to a network device.

The terminal device may send the Msg1 to the network device on a physical random access channel (physical random access channel, PRACH). The Msg1 may carry a preamble. The terminal device may receive a plurality of SSBs from the network device. The terminal device may detect receive power of the plurality of SSBs, and select an SSB with maximum receive power from the plurality of SSBs. The terminal device may randomly select an RO based on a random access channel occasion (random access channel occasion, RO) associated with an index of the SSB with the maximum receive power, for transmitting a preamble. The RO may be understood as a time-frequency resource for random access. An association relationship between an index of an SSB and an RO may be preconfigured by the network device.

In an example, the terminal device may select one preamble from the 64 preambles, and send the preamble to the network device based on the Msg1.

S202: The network device sends a message 2 (message 2, Msg2) to the terminal device.

After receiving the preamble, the network device allocates a time-frequency domain resource of the Msg2, scheduling information of a message 3 (message 3, Msg3), and the like to the terminal device.

The Msg2 is also referred to as random access response (random access response, RAR) information. The RAR information may include the scheduling information of the Msg3, that is, RAR uplink scheduling (RAR UL grant) information. The scheduling information may indicate a time-frequency resource of the Msg3.

S203: The terminal device sends the message 3 (Msg3) to the network device.

The terminal device may send the Msg3 to the network device through a physical uplink shared channel (physical uplink shared channel, PUSCH). The terminal device may send the Msg3 on the time-frequency resource indicated by the Msg2.

S204: The network device sends a message 4 (Msg4) to the terminal device.

The Msg4 is mainly used for conflict resolution. When a plurality of terminal devices simultaneously performs access, a terminal device that is selected for the random access needs to be determined. For example, the Msg4 may include a terminal device identifier, to indicate that a terminal device corresponding to the terminal device identifier successfully performs random access.

To improve a coverage capability, an RO resource that can send a preamble with repetitions, namely, an RO group (group) (SSBs bound to all ROs in the RO group are the same), may be configured for the SSB, so that the terminal device is allowed to send the preamble with repetitions in an RO group that can send the preamble with repetitions and that corresponds to the selected SSB, to increase receive power of the preamble.

The following describes a mapping relationship between an index of an SSB and an RO (an RO-SSB mapping relationship) in S201. Currently, a common (RACH-configgeneric) information element may be configured through a RACH to configure a time-frequency resource of a PRACH in a UL slot. The terminal device may perform random access through the PRACH in the UL slot.

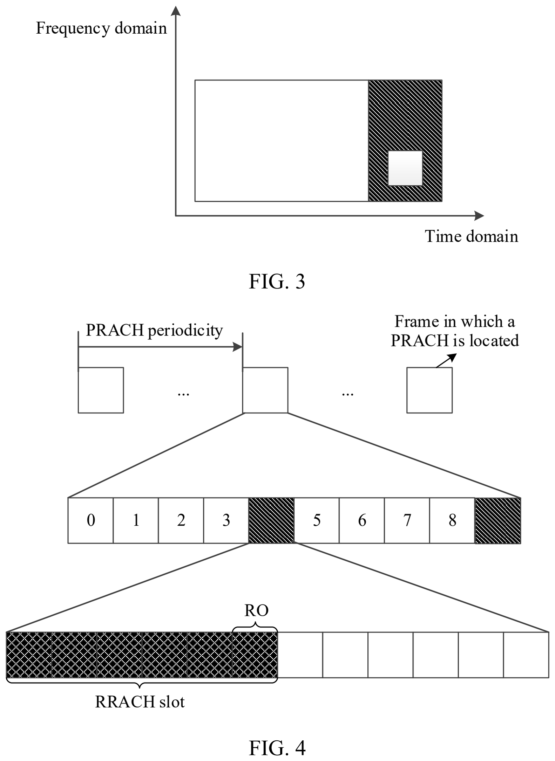

For example, with reference to FIG. 3, a horizontal direction represents time domain, and a vertical direction represents frequency domain. In FIG. 3, a white rectangle on the left represents a downlink (downlink, DL) slot (slot), and a shadow rectangle on the right represents a UL slot. The white rectangle in the UL slot represents a time-frequency resource of a PRACH specified by a common information element of a RACH configuration. For example, based on a random access channel-configuration index (prach-ConfigurationIndex) parameter in a common information element of a higher-layer information element RACH configuration, time domain position information like a periodicity, a frame number, a subframe number, a slot number, and a quantity of ROs in the slot of the PRACH may be obtained by looking up a table (for example, Tables 6.3.3.2-2 to 6.3.3.2-4 in the protocol 38211).

For example, with reference to FIG. 4, a rectangle in a first row in FIG. 4 is a frame in which a PRACH is located, and a time domain distance between two adjacent rectangles represents a PRACH periodicity. A rectangle in a second row is formed by subframes of the frame in which the PRACH is located, and each shadow rectangle is a subframe in which the PRACH is located. A rectangle in a third row shows a structure of a slot of the subframe where the PRACH is located. A shadow rectangle is a slot in which the PRACH is located, and is referred to as a PRACH slot (slot). There are six shadow rectangles, and each rectangle represents one RO. In other words, each PRACH slot includes six ROs.

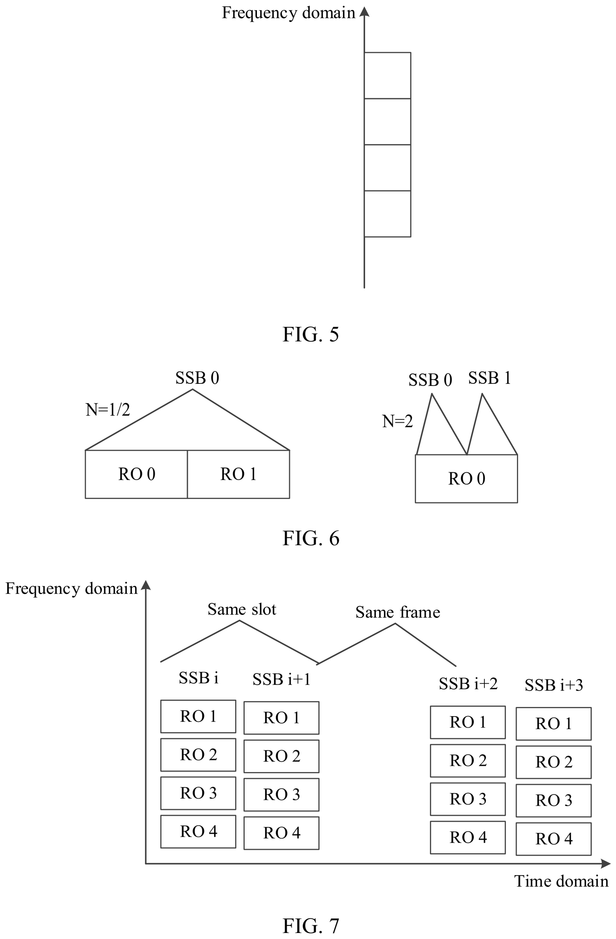

A frequency-domain start position and frequency-division multiplexing times of the PRACH can be obtained based on a message 1-frequency domain start position (msg1-FrequencyStart) parameter and a message 1-frequency-division multiplexing (message 1-frequency-division multiplexing, msgl-FDM) parameter in a common information element of a higher-layer information element RACH configuration, and a frequency domain position of the PRACH is determined. For example, with reference to FIG. 5, a vertical direction in FIG. 5 represents frequency domain, each rectangle is one RO, and four ROs are arranged starting from a frequency domain position specified by a message 1-frequency domain start position.

As described above, in a process of transmitting the Msg1, the terminal device selects an RO based on an index of an SSB to transmit a preamble sequence. Therefore, in the current NR standard, in addition to specifying a time-frequency resource of a PRACH, an RO-SSB mapping relationship further needs to be specified. For example, an index of one SSB may be associated with a plurality of ROs, or indexes of a plurality of SSBs are associated with one RO. For example, the network device may configure a mapping relationship between N SSBs and one RO based on a higher-layer parameter SSB-each RACH-occasion and carrier-preamble of each SSB (ssb-perRACH-OccasionAndCB-PreamblesPerSSB). When N is less than 1, one SSB is associated with 1/N ROs. When N is greater than 1, the N SSBs are associated with one RO. In other words, one SSB is associated with 1/N ROs.

For example, refer to FIG. 6. When N=1/2, one SSB is associated with two ROs. When N=2, one RO is associated with two SSBs. Therefore, when an index of one SSB is associated with a plurality of ROs, the terminal device selects one of the plurality of ROs, and selects a preamble transmitted on the RO. After an association relationship between the RO and the SSB is determined, RO-SSB mapping may be started. A sequence is frequency domain first, and then time domain, and same slot first, then same frame, and different frames finally.

For example, refer to FIG. 7. In FIG. 7, a horizontal direction represents time domain, and a vertical direction represents frequency domain. When an SSB set sent by a network device is {SSB i, SSB i+1, SSB i+2, SSB i+3}, msgl-FDM=4, and N=1/4, one SSB is associated with four ROs, an RO set is denoted as {RO 1, RO 2, RO 3, RO 4}, and a complete RO-SSB mapping periodicity includes 16 ROs.

An RO-SSB mapping sequence is arranged starting from frequency domain corresponding to an RO time domain position. In other words, the RO 1 to the RO 4 corresponding to the SSB i occupy four RO positions in frequency domain corresponding to a first RO time domain position of a start PRACH slot of a same frame, the RO 1 to the RO 4 corresponding to the SSB i+1 occupy four RO positions in frequency domain corresponding to a second RO time domain position of the start PRACH slot, the RO 1 to the RO 4 corresponding to the SSB i+1 occupy four RO positions in frequency domain corresponding to a second RO time domain position of the start PRACH slot of the same frame, the RO 1 to the RO 4 corresponding to the SSB i+2 occupy four RO positions in frequency domain corresponding to the first RO time domain position of a second PRACH slot of the same frame, and the RO 1 to the RO 4 corresponding to the SSB i+3 occupy four RO positions in frequency domain corresponding to the second RO time domain position of the second PRACH slot of the same frame.

To enhance a coverage capability of the PRACH, the network device may add a PRACH resource, and define an RO group, so that the terminal device sends a preamble with repetitions in a time division manner, to increase receive power of the network device and improve coverage. A specific implementation of the newly added resource may be: adding signaling with a same structure as that of a legacy PRACH to indicate a resource configuration and an SSB-RO mapping of a new PRACH, or adding only a signaling part that is new to combine with a part of signaling of a legacy PRACH to indicate a resource configuration and an SSB-RO mapping of a new PRACH. For example, only a time-frequency offset of the new PRACH relative to the legacy PRACH is added, and remaining legacy signaling is reused or only a prach-ConfigurationIndex is added to provide a time domain resource position.

However, adding an RO resource, defining an RO group on a valid RO defined in the 3GPP protocol, and transmitting a preamble with repetitions may increase coverage, but the following problems exist. Due to a small quantity of uplink resources, a new PRACH and a legacy (legacy) PRACH may overlap in time domain. When different SSBs are mapped to PRACHs overlapping in time domain and a quantity of the different SSBs that are mapped exceeds a quantity of analog beams generated by the network device (a capability of the network device to simultaneously generate a plurality of analog beams is limited), the network device can generate only some beams, receive and detect, only in a direction of the generated beam, a PRACH sent by the terminal device, and cannot receive and detect a PRACH sent by the terminal device in a direction of a beam that is not generated. Consequently, overlapping RO resources cannot be actually used for PRACH transmission with repetitions. In other words, this causes invalidity of the newly added ROs, reduces an actual PRACH transmission number, and impairs coverage performance.

The valid RO in this application is a random access channel occasion that can be used by the terminal device to send the PRACH. A meaning of the valid RO defined with reference to the 3GPP protocol may be as follows:

For a paired spectrum (like FDD) or a supplementary uplink frequency band,
all PRACH occasions are valid.

For a non-paired spectrum (like TDD), there are the following two cases.

Case 1: If a UE tdd-UL-DL-configuration command is not configured, a PRACH occasion in a PRACH slot is valid, if the PRACH occasion is not before an SS/PBCH block in the same PRACH slot, and a start moment of the PRACH occasion is at least N_gap symbols from an end moment of a last symbol of a received symbol of the SS/PBCH block.

Case 2: If a tdd-UL-DL-configuration command is configured, a PRACH occasion in a PRACH slot is valid within a UL symbol, or the PRACH occasion in the PRACH slot is not before an SS/PBCH block in the PRACH slot, and a start moment of the PRACH occasion is at least N_gap symbols from an end moment of a last symbol of a received symbol of the SS/PBCH block.

For details about N_gap, see Table 8.1-2 in section 8.1 of the protocol 38213.

For the meaning of the valid RO defined in the 3GPP protocol, the protocol content embodied in the protocol may be as follows:

For paired spectrum (FDD) or supplementary uplink band,
all PRACH occasions are valid.

For unpaired spectrum (TDD), there are the following two cases.

Case 1: tdd-UL-DLConfiggenericCommon is NOT configured, a PRACH occasion in a PRACH slot is valid if it does not precede a SS/PBCH block in the PRACH slot and starts at least Ngap symbols after a last SS/PBCH block reception symbol.

Case 2: tdd-UL-DLConfiggenericCommon is configured, a PRACH occasion in a PRACH slot is valid if it is within UL symbols, or a PRACH occasion in a PRACH slot is valid if it does not precede a SS/PBCH block in the PRACH slot and starts at least Ngap symbols after a last downlink symbol and at least Ngap symbols after a last SS/PBCH block transmission symbol.

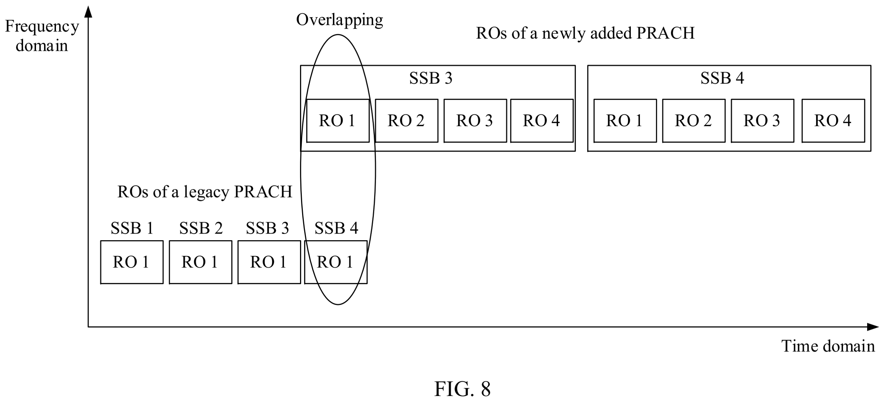

An example is used to describe a problem of RACH performance deterioration caused by an SSB beam conflict. As shown in FIG. 8, ROs of a newly added PRACH and a legacy PRACH overlap in time domain. An overlapping part of the new PRACH corresponds to an SSB 3, and an overlapping part of the legacy PRACH corresponds to an SSB 4. The SSB 3 and the SSB 4 are different, and a conflict occurs. If a network device configures two SSB beams for a same slot, no problem occurs. However, if the network device (with a limited capability) configures one SSB beam for a same slot, to ensure backward compatibility, the network device generates an SSB 4 beam corresponding to the legacy PRACH, and cannot generate an SSB 3 beam corresponding to the new PRACH. Consequently, a repetition number decreases, and random access performance is affected.

Based on this, an embodiment of this application provides a communication method, to improve random access performance.

In the following embodiments, the communication method provided in embodiments of this application is described in detail by using a network device and a terminal device as an example. It should be understood that an operation performed by the network device may alternatively be implemented by a processor in the network device, a chip, a chip system, a functional module, or the like, and an operation performed by the terminal device may alternatively be implemented by a processor in the terminal device, a chip, a chip system, a functional module, or the like. This is not limited in this application.

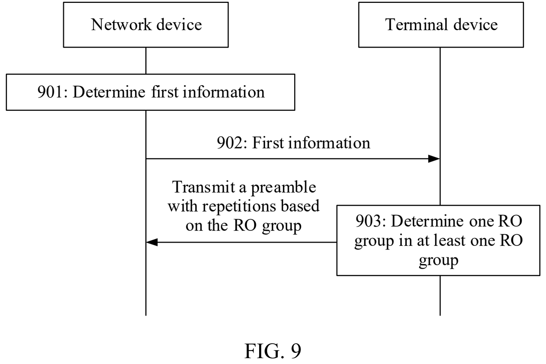

Based on the foregoing descriptions, an embodiment of this application provides a communication method. As shown in FIG. 9, a procedure of the method may include the following steps.

Step 901: A network device determines first information, where the first information indicates a time-frequency position of a first PRACH resource, the first PRACH resource includes at least one RO group, the at least one RO group is for transmitting a preamble with repetitions, any RO in the at least one RO group is an RO that is capable of being used to transmit a preamble, and a quantity of SSB indexes included in a union set of a first index set corresponding to the at least one RO group and a second index set corresponding to a first RO is less than or equal to a first threshold. The first index set is an SSB index associated with an RO that is at a first time domain position and that is in the at least one RO group, and the second index set is an SSB index associated with the first RO at the first time domain position. The first RO is an RO used to transmit a preamble without repetitions. In other words, the first RO is the legacy RO described above.

Step 902: The network device sends the first information to a terminal device. Correspondingly, the terminal device receives the first information from the network device.

Step 903: The terminal device determines one RO group in the at least one RO group, and transmits a preamble with repetitions based on the RO group.

It should be understood that the first index set represents at least one index, and the second index set also represents at least one index. In other words, the first index set and the second index set are descriptions indicating at least one index, and are not limited to meanings such as set division. Composition of the at least one index may be described in another manner. This is not limited in this application.

In an optional implementation a1, the first threshold may be a quantity of SSBs corresponding to the first RO or the at least one RO group at the first time domain position.

In other words, in this implementation a1, any RO in the at least one RO group does not overlap the first RO in time domain; or any RO in the at least one RO group overlaps, in time domain, only a first RO whose associated SSB index is the same as that of the RO in the at least one RO group.

In an optional implementation a2, the first threshold may be a quantity of SSB beams that are used by the network device to receive a preamble at the first time domain position.

In other words, in this implementation a2, an RO at the first time domain position in the at least one RO group overlaps only a first RO having a first feature in time domain, where the first feature is that a sum of different SSB indexes between SSB indexes associated with the RO at the first time domain position and the first RO is less than or equal to a quantity of SSB beams used by the network device to receive a preamble at the first time domain position.

In an optional implementation a3, the first threshold may be predefined.

In an optional implementation a4, the first threshold may be configured by the network device.

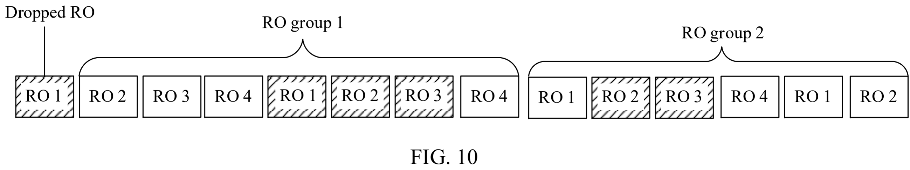

All ROs included in the at least one RO group may be used to transmit a preamble during actual transmission. In other words, all ROs are ROs that can actually transmit a preamble. In other words, none of the ROs in the at least one RO group is a dropped (dropped) RO, and the dropped RO is an invalid RO due to the following reasons: (1) an invalid RO specified in a protocol (for a meaning of the invalid RO, refer to the foregoing description of the valid RO defined in the protocol); and (2) an RO that is at the first time domain position and that is obtained when the quantity of SSB indexes included in the union set of the first index set corresponding to the at least one RO group and the second index set corresponding to the first RO is greater than the first threshold. For example, as shown in FIG. 10, ROs included in an RO group 1 and an RO group 2 are ROs shown in white rectangles, ROs shown in shadow rectangles are dropped ROs, and the dropped ROs are not included in the RO group.

Optionally, a first RO group may be used to transmit a preamble for a first repetition number, where a quantity of ROs included in the first RO group is a positive integer multiple of the first repetition number, the first RO group is any RO group in the at least one RO group, and the first repetition number is one of a plurality of repetition numbers configured by the network device.

Optionally, the first RO group may be further used to transmit a preamble for another repetition number other than the first repetition number. For example, the another repetition number may be a second repetition number or a third repetition number. In an example, the first RO group may be used to transmit a preamble for the second repetition number, where the quantity of ROs included in the first RO group is a positive integer multiple of the second repetition number, and the second repetition number is one of the plurality of repetition numbers configured by the network device.

The repetition number may alternatively be understood as a repetition level.

For example, a quantity of ROs included in one RO group may be 2, 4, 8, or another value, or a quantity of ROs included in one RO group may be a positive integer multiple of 2, 4, 8, or another value. 2, 4, 8, or another value may be a repetition number (or referred to as a repetition level) configured by the network device.

In a possible manner, a repetition number that is used by the terminal device to transmit a preamble in one RO group and that is determined by the terminal device is the same as a repetition number used by the RO group to transmit the preamble. For example, when the terminal device determines that the repetition number that the preamble needs to be transmitted is 4, a quantity of ROs included in the RO group selected by the terminal device is 4. In other words, the repetition number that is of the RO group and that is determined by the terminal device to transmit the preamble is 4.

In an optional manner b1, an RO belonging to a third RO group may be included between two ROs in time domain in ROs included in a second RO group in the at least one RO group. The second RO group corresponds to a first SSB, and the third RO group corresponds to a second SSB.

In the manner b1, it may be understood that the ROs in the RO group are logically consecutive ROs (ROs that are not completely consecutive in time domain) at an SSB level. For example, it is assumed that there are eight ROs and two SSBs (an SSB 1 and an SSB 2) in time domain, and one RO group includes four ROs. The ROs 1 to 8 may alternate with the two SSBs in a time sequence. In other words, ROs with sequence numbers 1, 3, 5, and 7 are bound to the SSB 1, and ROs with sequence numbers 2, 4, 6, and 8 are bound to the SSB 2. An RO group (1-4, 1) is a first RO group that is of a first SSB (SSB 1) and whose corresponding repetition number is four. The RO group includes only four ROs bound to the SSB 1, that is, the ROs with sequence numbers 1, 3, 5, and 7. An RO group (2-4, 1) is a first RO group that is of a second SSB (SSB 2) and whose corresponding repetition number is four. The RO group includes only four ROs bound to the SSB 2, that is, the ROs with sequence numbers 2, 4, 6, and 8. In the foregoing case, the ROs in the RO group may be referred to as logically consecutive ROs at an SSB level.

In an optional manner b2, no RO in another RO group exists between ROs included in any RO group in the at least one RO group.

In the manner b2, it may be understood that the ROs in the RO group are logically consecutive ROs (ROs may be consecutive in time domain) at an RO level. For example, it is assumed that there are eight ROs and two SSBs (an SSB 1 and an SSB 2) in time domain, and one RO group includes four ROs. ROs 1 to 8 are consecutively mapped to two SSBs (SSB 1 and SSB 2) in a time sequence. In other words, ROs with sequence numbers 1, 2, 3, and 4 are bound to the SSB 1, and ROs with sequence numbers 5, 6, 7, and 8 are bound to the SSB 2. An RO group (1-4, 1) is a first RO group that is of a first SSB (SSB 1) and whose corresponding repetition number is four. The RO group includes only the four ROs bound to the SSB 1, that is, the ROs with sequence numbers 1, 2, 3, and 4. An RO group (2-4, 1) is a first RO group that is of a second SSB (SSB 2) and whose corresponding repetition number is four. The RO group includes only the four ROs bound to the SSB 2, that is, the ROs with sequence numbers 5, 6, 7, and 8. In the foregoing case, the ROs in the RO group may be referred to as logically consecutive ROs at an RO level.

Optionally, ROs included in a fourth RO group and a fifth RO group are the same, and the fourth RO group and the fifth RO group correspond to a same repetition number of preambles and correspond to different SSBs. In other words, when any two RO groups correspond to a same repetition number of preambles, but correspond to different SSBs, the two RO groups may include a same RO.

In an optional implementation, at least one same RO exists in ROs included in a sixth RO group and ROs included in a seventh RO group in the at least one RO group, and a quantity of ROs included in the sixth RO group is different from a quantity of ROs included in the seventh RO group. That the quantity of ROs included in the sixth RO group is different from the quantity of ROs included in the seventh RO group may alternatively be understood as that a repetition number of a preamble corresponding to the sixth RO group is different from a repetition number of a preamble corresponding to the seventh RO group. In other words, a same RO may exist between RO groups corresponding to different repetition levels.

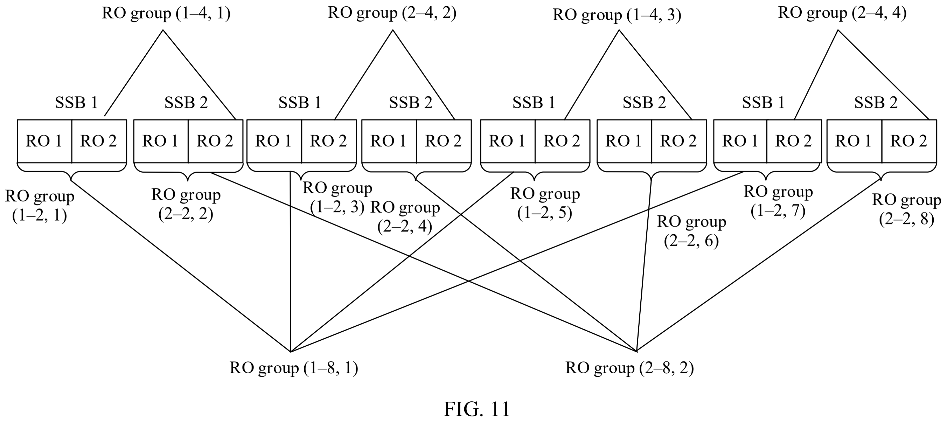

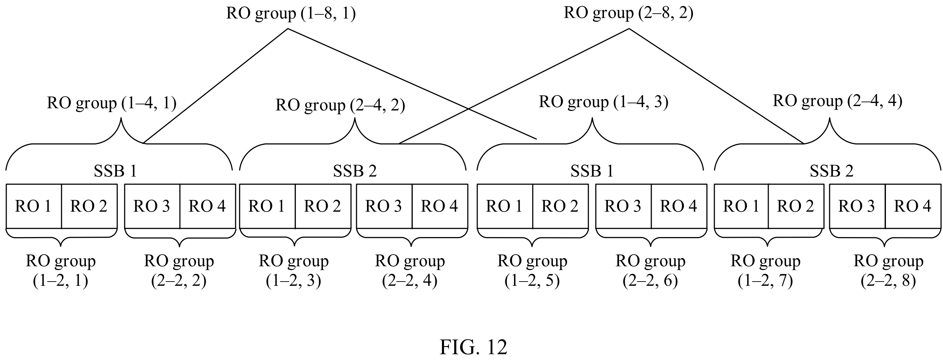

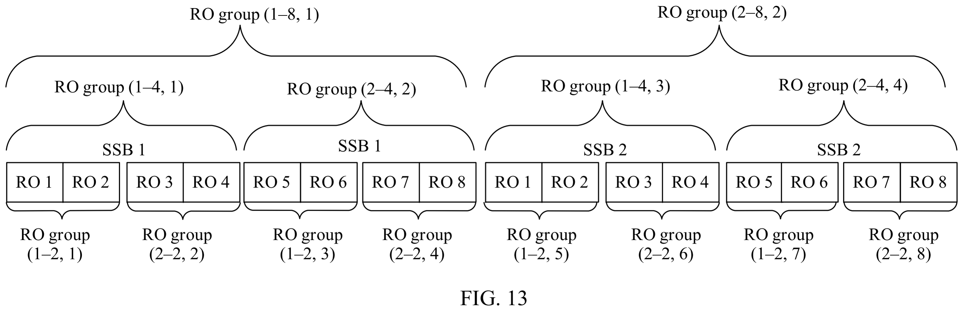

For example, an RO group that includes two ROs, an RO group that includes four ROs, and an RO group that includes eight ROs may have a same RO. For example, FIG. 11 to FIG. 13 are diagrams of three examples in which a same RO exists between RO groups. In the example shown in FIG. 11, when an SSB 1 and an SSB 2 are mapped to ROs, in time domain, each SSB are mapped to two consecutive ROs logically, and then the SSBs are alternated. In the example shown in FIG. 12, when an SSB 1 and an SSB 2 are mapped to ROs, in time domain, each SSB are mapped to four consecutive ROs logically, and then the SSBs are alternated. In the example shown in FIG. 13, when an SSB 1 and an SSB 2 are mapped to ROs, in time domain, each SSB are mapped to eight consecutive ROs logically, and then the SSBs are alternated. It should be understood that the foregoing three manners in which the RO groups share the RO are merely examples, and there may be another manner. This is not limited in this application.

In a possible manner, when the quantity of ROs included in the sixth RO group in the at least one RO group is greater than the quantity of ROs included in the seventh RO group, the ROs included in the seventh RO group are a subset of the ROs included in the sixth RO group. For example, as shown in FIG. 11 to FIG. 13, ROs included in an RO group including two ROs are a subset of ROs included in an RO group including four ROs.

According to the foregoing communication method, all ROs included in the at least one RO group are ROs that can actually transmit a preamble, so that an actual transmission number that is of the preamble and that is used by the RO group selected by the terminal device does not decrease, a coverage capability of the PRACH can be improved, and random access performance can be improved.

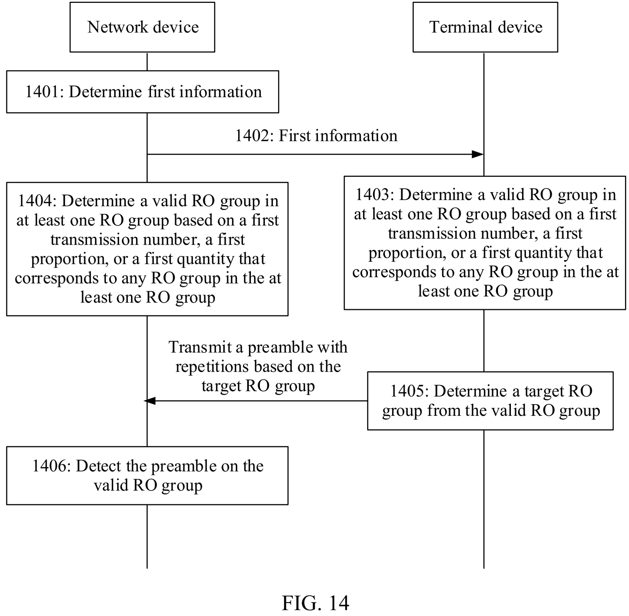

Based on the foregoing descriptions, an embodiment of this application further provides another communication method. As shown in FIG. 14, a procedure of the method may include the following steps.

Step 1401: A network device determines first information, where the first information indicates a time-frequency position of a first PRACH resource, the first PRACH resource includes at least one random access channel occasion RO group, the at least one RO group is for transmitting a preamble with repetitions, and any RO in the at least one RO group is an RO that is capable of being used to transmit a preamble.

ROs included in any RO group in the at least one RO group are formed by valid ROs defined in a protocol. For a meaning of the valid RO defined in the protocol, refer to the foregoing description of the valid RO defined in the protocol. In other words, there may be an RO that is included in the RO group and that is actually not used to transmit the preamble although the RO is defined as valid in the protocol. Herein, the RO that cannot be actually used to transmit the preamble may be described as a dropped RO. For the dropped RO in this embodiment, refer to the RO that is invalid due to the reason (2) in the embodiment shown in FIG. 9. In this embodiment, the dropped RO is described as a second RO. In other words, the second RO is an RO that is actually not used to transmit the preamble. The RO that is actually not used to transmit the preamble means that the terminal device cannot transmit the preamble in the RO, or the network device cannot receive the preamble in the RO.

Because a second RO may exist in an RO group, an actual transmission number of a preamble in one RO group is less than or equal to a repetition number of a preamble corresponding to the RO group.

In an optional implementation, an RO belonging to a third RO group is included between two ROs in time domain in ROs included in a second RO group in the at least one RO group, the second RO group corresponds to a first SSB, and the third RO group corresponds to a second SSB; or no RO in another RO group exists between ROs included in any RO group in the at least one RO group. For details, refer to related descriptions in the embodiment shown in FIG. 9. Details are not described herein again.

Optionally, ROs included in a fourth RO group and a fifth RO group are the same, and the fourth RO group and the fifth RO group correspond to a same repetition number of preambles and correspond to different SSBs. For details, refer to related descriptions in the embodiment shown in FIG. 9. Details are not described herein again.

In a possible manner, at least one same RO exists in ROs included in a sixth RO group and ROs included in a seventh RO group in the at least one RO group, and a quantity of ROs included in the sixth RO group is different from a quantity of ROs included in the seventh RO group. For details, refer to related descriptions in the embodiment shown in FIG. 9. Details are not described herein again.

Step 1402: The network device sends the first information to a terminal device. Correspondingly, the terminal device receives the first information from the network device.

Step 1403: The terminal device determines a valid RO group in the at least one RO group based on a first transmission number, a first proportion, or a first quantity that corresponds to any RO group in the at least one RO group. The first transmission number is equal to a quantity of ROs that are capable of actually transmitting a preamble and that are in any RO group in the at least one RO group, the first proportion is a proportion of a second RO in one RO group, and the first quantity is a quantity of second ROs in one RO group.

In a manner, the terminal device may determine an RO group in which a first transmission number is greater than or equal to a first number threshold in the at least one RO group as the valid RO group.

Optionally, the first number threshold is less than or equal to a first repetition number of a preamble of the terminal device, and the first repetition number is any one of a plurality of repetition numbers configured by the network device.

The first number threshold may be predefined, or may be configured by the network device.

For example, assuming that the first repetition number is 2, the first number threshold may be 2. For another example, assuming that the first repetition number is 4, the first number threshold may be 3 or 4. For another example, assuming that the first repetition number is 8, the first number threshold may be 5, 6, 7, or 8.

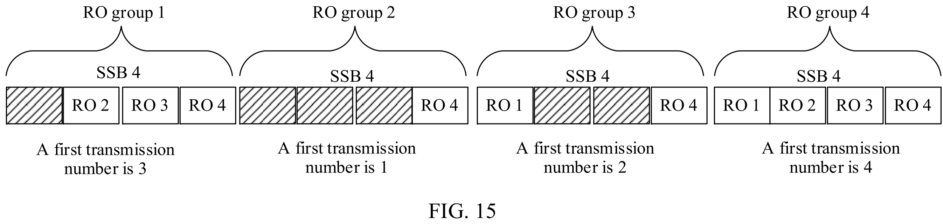

For example, as shown in FIG. 15, four RO groups, each of which including four ROs, that is, an example in which the first repetition number is 4, and the first number threshold is 3 is used as an example for description. A first transmission number of an RO group 1 is 3, a first transmission number of an RO group 2 is 1, a first transmission number of an RO group 3 is 2, and a first transmission number of an RO group 4 is 4. Therefore, it can be learned that the RO group 1 and the RO group 4 are valid RO groups.

In another manner, the terminal device determines an RO group in which a proportion of the second RO in the RO group is less than or equal to the first proportion as the valid RO group.

In still another manner, the terminal device determines an RO group in which a proportion of an RO that is capable of actually transmitting a preamble in one RO group is greater than or equal to a second proportion as the valid RO group. The second proportion is equal to 1 minus the first proportion.

In yet another manner, the terminal device determines an RO group in which a quantity of second ROs in the RO group is less than or equal to the first quantity as the valid RO group.

In an optional implementation, when an actual transmission number of an eighth RO group is less than a second number threshold and is greater than or equal to a third number threshold, the eighth RO group is not capable of being used by the terminal device to transmit a preamble with repetitions for a second repetition number, but is capable of being used by the terminal device to transmit a preamble with repetitions for a third repetition number. The second number threshold is less than or equal to the second repetition number, the third number threshold is less than or equal to the third repetition number, the second repetition number is greater than the third repetition number, the second repetition number is one of the plurality of repetition numbers configured by the network device, and the third repetition number is one of the plurality of repetition numbers configured by the network device.

That the eighth RO group is not capable of being used by the terminal device to transmit the preamble with repetitions for the second repetition number may be understood that the eighth RO group is an invalid RO group for transmitting the preamble with repetitions for the second repetition number. That the eighth RO group is used by the terminal device to transmit the preamble with repetitions for the third repetition number may be understood that the eighth RO group is a valid RO group for transmitting the preamble with repetitions for the third repetition number.

In other words, when an actual transmission number of an invalid RO group with a high repetition level is greater than or equal to a transmission number threshold with a low repetition level, the invalid RO group with the high repetition level may be used as a valid RO group that is with a low repetition level and that meets the foregoing requirement, and a preamble resource corresponding to the invalid RO group with the high repetition level is also used by the low repetition level that meets the foregoing requirement. Optionally, the invalid RO group with the high repetition level may be used as a nearest valid RO group that is with a low repetition level and that meets the foregoing requirement.

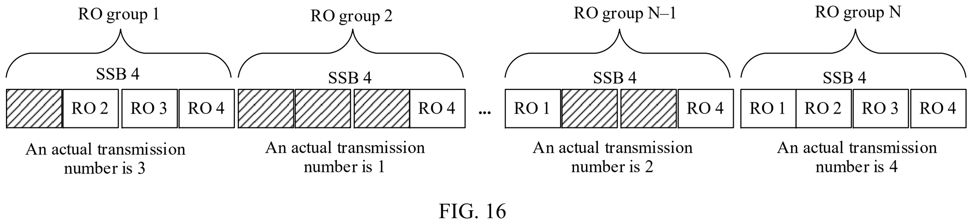

It is assumed that a first number threshold corresponding to the repetition number 4 of the preamble is 3, and a first number threshold corresponding to the repetition number 2 of the preamble is 2. For example, as shown in FIG. 16, when a repetition number of a preamble is 4, an actual transmission number of a corresponding RO group is less than 3, but an actual transmission number is greater than or equal to 2, the RO group may be used to transmit a preamble whose repetition number is 2. As shown in FIG. 16, an actual transmission number of an RO group N-1 is 2. In this case, the RO group N-1 may be used to transmit a preamble whose repetition level is 2 with repetitions.

Step 1404: The network device determines the valid RO group in the at least one RO group based on the first transmission number, the first proportion, or the first quantity that corresponds to any RO group in the at least one RO group.

Specifically, for a method for determining the valid RO group by the network device, refer to related descriptions of the method for determining the valid RO group by the terminal device in step 1403. Details are not described again.

Step 1405: The terminal device determines a target RO group from the valid RO group, and transmits a preamble with repetitions based on the target RO group.

In an optional manner c1, a quantity of ROs (a quantity of ROs that are capable of actually transmitting the preamble) included in the target RO group is greater than or equal to a repetition number of the preamble currently calculated by the terminal device.

The repetition number that is of the preamble and that is currently calculated by the terminal device may be a repetition number that is estimated by the terminal device and that is required to reach target receive power. The target receive power is configured by the network device.

Optionally, the terminal device may obtain, through calculation based on maximum transmission power and a path loss estimate of a reference signal, the repetition number required to reach the target receive power. The terminal device may obtain, through calculation, a path loss estimation value of the reference signal based on reference signal received power (reference signal received power, RSRP) measurement value and signal power that is of the reference signal and that is notified by the network device.

In a possible implementation, the terminal device may determine a partially valid RO group in the valid RO group, where a quantity of ROs included on the partially valid RO group is greater than or equal to the repetition number of the preamble currently calculated by the terminal device, so that the terminal device determines the target RO group in the partially valid RO group.

In an optional manner c2, when the terminal device transmits the preamble with repetitions in the target RO group at power less than or equal to maximum transmission power, receive power of the preamble is greater than or equal to a first power threshold.

Optionally, the first power threshold may be target receive power configured by the network device, or may be predefined.

When the terminal device transmits the preamble with repetitions in the target RO group by using the power less than or equal to the maximum transmission power, the receive power of the preamble may be an estimated value of accumulated power at which the network device receives the preamble when the terminal device sends the preamble on an actually available RO included in the target RO group at power less than or equal to the maximum power.

In a possible implementation, the terminal device may determine a partially valid RO group in the valid RO group. When the terminal device transmits a preamble with repetitions on the partially valid RO group at power less than or equal to the maximum transmission power, the receive power of the preamble is greater than or equal to the first power threshold, so that the terminal device determines the target RO group in the partially valid RO group.

Step 1406: The network device detects a preamble on the valid RO group.

According to the foregoing communication method, the valid RO group is determined, so that a reduction range of an actual transmission number of a preamble can be limited, a PRACH coverage loss is reduced, and random access performance is improved.

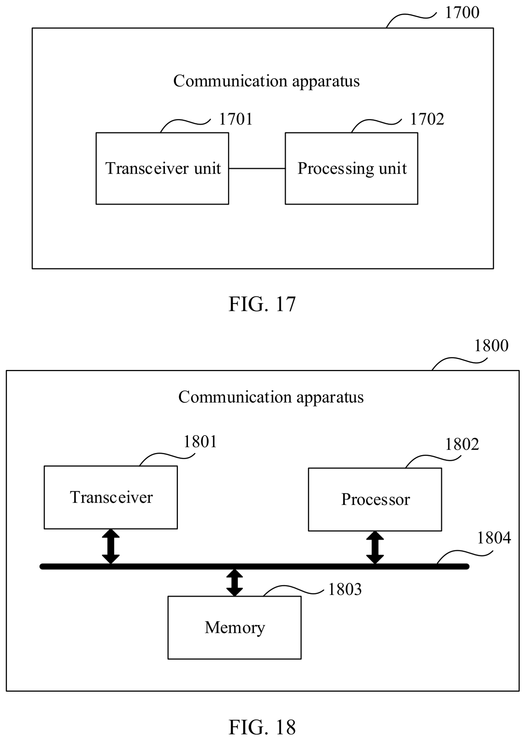

Based on the foregoing embodiments, an embodiment of this application further provides a communication apparatus. Refer to FIG. 17. A communication apparatus 1700 may include a transceiver unit 1701 and a processing unit 1702. The transceiver unit 1701 is configured to be used by the communication apparatus 1700 to receive information (a signal, a message, or data) or send information (a signal, a message, or data). The processing unit 1702 is configured to control and manage an action of the communication apparatus 1700. The processing unit 1702 may further control steps performed by the transceiver unit 1701.

For example, the communication apparatus 1700 may be specifically the terminal device in the foregoing embodiments or a processor, a chip, a chip system, a functional module, or the like in the terminal device. Alternatively, the communication apparatus 1700 may be specifically the network device in the foregoing embodiments or a processor, a chip, a chip system, a functional module, or the like in the network device.

In an embodiment, when the communication apparatus 1700 is configured to implement functions of the terminal device in the embodiment shown in FIG. 9, the following may be specifically included: The transceiver unit 1701 may be configured to receive first information from a network device, where the first information indicates a time-frequency position of a first physical random access channel PRACH resource, the first PRACH resource includes at least one random access channel occasion RO group, the at least one RO group is for transmitting a preamble with repetitions, any RO in the at least one RO group is an RO that is capable of being used to transmit a preamble, a quantity of synchronization signal and physical broadcast channel block SSB indexes included in a union set of a first index set corresponding to the at least one RO group and a second index set corresponding to a first RO is less than or equal to a first threshold, the first index set is an SSB index associated with an RO that is at a first time domain position and that is in the at least one RO group, the second index set is an SSB index associated with the first RO at the first time domain position, and the first RO is an RO used to transmit a preamble without repetitions; the processing unit 1702 may be configured to determine one RO group in the at least one RO group; and the transceiver unit 1701 may be further configured to transmit a preamble with repetitions based on the RO group.

Optionally, the first threshold is a quantity of SSBs corresponding to the first RO or the at least one RO group at the first time domain position; or the first threshold is a quantity of SSB beams that are used by the network device to receive a preamble at the first time domain position; or the first threshold is predefined; or the first threshold may be configured by the network device.

In a possible manner, a first RO group is for transmitting a preamble for a first repetition number, where a quantity of ROs included in the first RO group is a positive integer multiple of the first repetition number, the first RO group is any RO group in the at least one RO group, and the first repetition number is one of a plurality of repetition numbers configured by the network device.

In an example, a repetition number used by the terminal device to transmit the preamble in the RO group is the same as a repetition number used by the RO group to transmit the preamble.

In an optional implementation, an RO belonging to a third RO group is included between two ROs in time domain in ROs included in a second RO group in the at least one RO group, the second RO group corresponds to a first SSB, and the third RO group corresponds to a second SSB; or no RO in another RO group exists between ROs included in any RO group in the at least one RO group.

Optionally, ROs included in a fourth RO group and a fifth RO group are the same, and the fourth RO group and the fifth RO group correspond to a same repetition number of preambles and correspond to different SSBs.

In a possible manner, at least one same RO exists in ROs included in a sixth RO group and ROs included in a seventh RO group in the at least one RO group, and a quantity of ROs included in the sixth RO group is different from a quantity of ROs included in the seventh RO group.

In another embodiment, when the communication apparatus 1700 is configured to implement functions of the network device in the embodiment shown in FIG. 9, the following may be specifically included: The processing unit 1702 may be configured to determine first information, where the first information indicates a time-frequency position of a first physical random access channel PRACH resource, the first PRACH resource includes at least one random access channel occasion RO group, the at least one RO group is for transmitting a preamble with repetitions, any RO in the at least one RO group is an RO that is capable of being used to transmit a preamble, a quantity of synchronization signal and physical broadcast channel block SSB indexes included in a union set of a first index set corresponding to the at least one RO group and a second index set corresponding to a first RO is less than or equal to a first threshold, the first index set is an SSB index associated with an RO that is at a first time domain position and that is in the at least one RO group, the second index set is an SSB index associated with the first RO at the first time domain position, and the first RO is an RO used to transmit a preamble without repetitions. The transceiver unit 1701 may be configured to send the first information to a terminal device.

Optionally, the first threshold is a quantity of SSBs corresponding to the first RO or the at least one RO group at the first time domain position; or the first threshold is a quantity of SSB beams that are used by the network device to receive a preamble at the first time domain position; or the first threshold is predefined; or the first threshold may be configured by the network device.

In a possible manner, a first RO group is for transmitting a preamble for a first repetition number, where a quantity of ROs included in the first RO group is a positive integer multiple of the first repetition number, the first RO group is any RO group in the at least one RO group, and the first repetition number is one of a plurality of repetition numbers configured by the network device.

In an optional implementation, an RO belonging to a third RO group is included between two ROs in time domain in ROs included in a second RO group in the at least one RO group, the second RO group corresponds to a first SSB, and the third RO group corresponds to a second SSB; or no RO in another RO group exists between ROs included in any RO group in the at least one RO group.

For example, ROs included in a fourth RO group and a fifth RO group are the same, and the fourth RO group and the fifth RO group correspond to a same repetition number of preambles and correspond to different SSBs.

In an example, at least one same RO exists in ROs included in a sixth RO group and ROs included in a seventh RO group in the at least one RO group, and a quantity of ROs included in the sixth RO group is different from a quantity of ROs included in the seventh RO group.

In another embodiment, when the communication apparatus 1700 is configured to implement functions of the terminal device in the embodiment shown in FIG. 14, the following may be specifically included: The transceiver unit 1701 may be configured to receive first information from a network device, where the first information indicates a time-frequency position of a first physical random access channel PRACH resource, the first PRACH resource includes at least one random access channel occasion RO group, the at least one RO group is for transmitting a preamble with repetitions, and any RO in the at least one RO group is an RO that is capable of being used to transmit a preamble; the processing unit 1702 may be configured to determine a valid RO group in the at least one RO group based on a first transmission number, a first proportion, or a first quantity that corresponds to any RO group in the at least one RO group, where the first transmission number is equal to a quantity of ROs that are capable of actually transmitting a preamble and that are in any RO group in the at least one RO group, the first proportion is a proportion of a second RO in one RO group, the first quantity is a quantity of second ROs in one RO group, and the second RO is an RO that is actually not used to transmit a preamble; the terminal device determines a target RO group from the valid RO group; and the transceiver unit 1701 may be further configured to transmit a preamble with repetitions based on the target RO group.

In an optional implementation, when determining the valid RO group in the at least one RO group based on the first transmission number, the first proportion, or the first quantity that corresponds to any RO group in the at least one RO group, the processing unit 1702 may be configured to:
determine an RO group in which a first transmission number is greater than or equal to a first number threshold in the at least one RO group as the valid RO group; or
determine an RO group in which a proportion of the second RO in one RO group is less than or equal to the first proportion as the valid RO group; or
determine an RO group in which a proportion of an RO that is capable of actually transmitting a preamble in one RO group is greater than or equal to a second proportion as the valid RO group, where the second proportion is equal to 1 minus the first proportion; or
determine an RO group in which a quantity of second ROs in one RO group is less than or equal to the first quantity as the valid RO group.

Optionally, the first number threshold is less than or equal to a first repetition number of a preamble of the terminal device, and the first repetition number is any one of a plurality of repetition numbers configured by the network device.

In a possible manner, when an actual transmission number of an eighth RO group is less than a second number threshold and is greater than or equal to a third number threshold, the eighth RO group is not capable of being used by the terminal device to transmit a preamble with repetitions for a second repetition number, but is capable of being used by the terminal device to transmit a preamble with repetitions for a third repetition number, where the second number threshold is less than or equal to the second repetition number, the third number threshold is less than or equal to the third repetition number, the second repetition number is greater than the third repetition number, the second repetition number is one of the plurality of repetition numbers configured by the network device, and the third repetition number is one of the plurality of repetition numbers configured by the network device.

For example, an RO belonging to a third RO group is included between two ROs in time domain in ROs included in a second RO group in the at least one RO group, the second RO group corresponds to a first SSB, and the third RO group corresponds to a second SSB; or no RO in another RO group exists between ROs included in any RO group in the at least one RO group.

In an optional manner, ROs included in a fourth RO group and a fifth RO group are the same, and the fourth RO group and the fifth RO group correspond to a same repetition number of preambles and correspond to different SSBs.

In an example, at least one same RO exists in ROs included in a sixth RO group and ROs included in a seventh RO group in the at least one RO group, and a quantity of ROs included in the sixth RO group is different from a quantity of ROs included in the seventh RO group.

Optionally, a quantity of ROs included in the target RO group is greater than or equal to a repetition number of a preamble currently calculated by the terminal device; or when the terminal device transmits a preamble with repetitions in the target RO group at power less than or equal to maximum transmission power, receive power of the preamble is greater than or equal to a first power threshold.

In another embodiment, when the communication apparatus 1700 is configured to implement functions of the network device in the embodiment shown in FIG. 14, the following may be specifically included: The processing unit 1702 may be configured to determine first information, where the first information indicates a time-frequency position of a first physical random access channel PRACH resource, the first PRACH resource includes at least one random access channel occasion RO group, the at least one RO group is for transmitting a preamble with repetitions, and any RO in the at least one RO group is an RO that is capable of being used to transmit a preamble; the transceiver unit 1701 may be configured to send the first information to a terminal device; and the processing unit 1702 may be further configured to: determine a valid RO group in the at least one RO group based on a first transmission number, a first proportion, or a first quantity that corresponds to any RO group in the at least one RO group, and detect a preamble on the valid RO group. The first transmission number is equal to a quantity of ROs that are capable of actually transmitting a preamble and that are in any RO group in the at least one RO group, the first proportion is a proportion of a second RO in one RO group, the first quantity is a quantity of second ROs in one RO group, and the second RO is an RO that is actually not used to transmit a preamble.

In an optional implementation, when determining the valid RO group in the at least one RO group based on the first transmission number, the first proportion, or the first quantity that corresponds to any RO group in the at least one RO group, the processing unit 1702 may be configured to:
determine an RO group in which a first transmission number is greater than or equal to a first number threshold in the at least one RO group as the valid RO group; or
determine an RO group in which a proportion of the second RO in one RO group is less than or equal to the first proportion as the valid RO group; or
determine an RO group in which a proportion of an RO that is capable of actually transmitting a preamble in one RO group is greater than or equal to a second proportion as the valid RO group, where the second proportion is equal to 1 minus the first proportion; or
determine an RO group in which a quantity of second ROs in one RO group is less than or equal to the first quantity as the valid RO group.

Optionally, the first number threshold is less than or equal to a first repetition number of a preamble of the terminal device, and the first repetition number is any one of a plurality of repetition numbers configured by the network device.

In a possible manner, when an actual transmission number of an eighth RO group is less than a second number threshold and is greater than or equal to a third number threshold, the eighth RO group is not capable of being used by the terminal device to transmit a preamble with repetitions for a second repetition number, but is capable of being used by the terminal device to transmit a preamble with repetitions for a third repetition number, where the second number threshold is less than or equal to the second repetition number, the third number threshold is less than or equal to the third repetition number, the second repetition number is greater than the third repetition number, the second repetition number is one of the plurality of repetition numbers configured by the network device, and the third repetition number is one of the plurality of repetition numbers configured by the network device.

For example, an RO belonging to a third RO group is included between two ROs in time domain in ROs included in a second RO group in the at least one RO group, the second RO group corresponds to a first SSB, and the third RO group corresponds to a second SSB; or no RO in another RO group exists between ROs included in any RO group in the at least one RO group.

In an example, ROs included in a fourth RO group and a fifth RO group are the same, and the fourth RO group and the fifth RO group correspond to a same repetition number of preambles and correspond to different SSBs.

Optionally, at least one same RO exists in ROs included in a sixth RO group and ROs included in a seventh RO group in the at least one RO group, and a quantity of ROs included in the sixth RO group is different from a quantity of ROs included in the seventh RO group.

It should be noted that, in embodiments of this application, division into the units is an example, and is merely a logical function division. During actual implementation, another division manner may be used. Functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in form of a software product. The software product is stored in a storage medium and includes several instructions for instructing a computer device (which may be a personal computer, a server, a network device) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

Based on the foregoing embodiments, an embodiment of this application further provides a communication apparatus. Refer to FIG. 18. A communication apparatus 1800 may include a transceiver 1801 and a processor 1802. Optionally, the communication apparatus 1800 may further include a memory 1803. The memory 1803 may be disposed inside the communication apparatus 1800, or may be disposed outside the communication apparatus 1800. The processor 1802 may control the transceiver 1801 to receive and send signals, information, messages, data, or the like.

Specifically, the processor 1802 may be a central processing unit (central processing unit, CPU), a network processor (network processor, NP), or a combination of a CPU and an NP. The processor 1802 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The transceiver 1801, the processor 1802, and the memory 1803 are connected to each other. Optionally, the transceiver 1801, the processor 1802, and the memory 1803 are connected to each other through a bus 1804. The bus 1804 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one bold line is used to represent the bus in FIG. 18, but this does not mean that there is only one bus or only one type of bus.

In an optional implementation, the memory 1803 is configured to store a program and the like. Specifically, the program may include program code, and the program code includes computer operation instructions. The memory 1803 may include a RAM, and may further include a non-volatile memory (non-volatile memory), for example, one or more magnetic disk memories. The processor 1802 executes the application program stored in the memory 1803 to implement the foregoing functions, to implement the functions of the communication apparatus 1800.

For example, the communication apparatus 1800 may be the network device in the foregoing embodiments, or may be the terminal device in the foregoing embodiments.

In an embodiment, when the communication apparatus 1800 implements a function of the terminal device in the embodiment shown in FIG. 9, the transceiver 1801 may implement a receiving/sending operation performed by the terminal device in the embodiment shown in FIG. 9, and the processor 1802 may implement an operation other than the receiving/sending operation performed by the terminal device in the embodiment shown in FIG. 9. Specifically, for related specific descriptions, refer to related descriptions in the embodiment shown in FIG. 9. Details are not described herein again.

In another embodiment, when the communication apparatus 1800 implements a function of the network device in the embodiment shown in FIG. 9, the transceiver 1801 may implement a receiving/sending operation performed by the network device in the embodiment shown in FIG. 9, and the processor 1802 may implement an operation other than the receiving/sending operation performed by the network device in the embodiment shown in FIG. 9. Specifically, for related specific descriptions, refer to related descriptions in the embodiment shown in FIG. 9. Details are not described herein again.

In another embodiment, when the communication apparatus 1800 implements a function of the terminal device in the embodiment shown in FIG. 14, the transceiver 1801 may implement a receiving/sending operation performed by the terminal device in the embodiment shown in FIG. 14, and the processor 1802 may implement an operation other than the receiving/sending operation performed by the terminal device in the embodiment shown in FIG. 14. Specifically, for related specific descriptions, refer to related descriptions in the embodiment shown in FIG. 14. Details are not described herein again.

In another embodiment, when the communication apparatus 1800 implements a function of the network device in the embodiment shown in FIG. 14, the transceiver 1801 may implement a receiving/sending operation performed by the network device in the embodiment shown in FIG. 14, and the processor 1802 may implement an operation other than the receiving/sending operation performed by the network device in the embodiment shown in FIG. 14. Specifically, for related specific descriptions, refer to related descriptions in the embodiment shown in FIG. 14. Details are not described herein again.

Based on the foregoing embodiments, an embodiment of this application provides a communication system. The communication system may include the terminal device, the network device, and the like in the foregoing embodiments.

An embodiment of this application further provides a computer-readable storage medium. The computer-readable storage medium is configured to store a computer program. When the computer program is executed by a computer, the computer may implement the communication methods provided in the method embodiments.

An embodiment of this application further provides a computer program product. The computer program product is configured to store a computer program. When the computer program is executed by a computer, the computer may implement the communication methods provided in the method embodiments.

An embodiment of this application further provides a chip, including a processor. The processor is coupled to a memory, and is configured to invoke a program in the memory, so that the chip implements the communication methods provided in the method embodiments.

An embodiment of this application further provides a chip. The chip is coupled to a memory, and the chip is configured to implement the communication method provided in the foregoing method embodiments.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving first information from a network device, wherein the first information indicates a time-frequency position of a first physical random access channel PRACH resource, the first PRACH resource comprises at least one random access channel occasion RO group, the at least one RO group is for transmitting a preamble with repetitions, any RO in the at least one RO group is an RO that is capable of being used to transmit a preamble, SSBs associated with all ROs in any RO group in the at least one RO group are the same, a quantity of synchronization signal and physical broadcast channel block SSB indexes comprised in a union set of a first index set corresponding to the at least one RO group and a second index set corresponding to a first RO is less than or equal to a first threshold, the first index set is an SSB index associated with an RO that is at a first time domain position and that is in the at least one RO group, the second index set is an SSB index associated with the first RO at the first time domain position, and the first RO is an RO used to transmit a preamble without repetitions;
determining, by the terminal device, a first RO group from the at least one RO group, wherein a quantity of ROs comprised in the first RO group is equal to a first repetition number, and the first repetition number is one of repetition numbers configured by the network device; and
transmitting a preamble with repetitions based on the first RO group for the first repetition number.

2. The method according to claim 1, wherein the first threshold is a quantity of SSBs corresponding to the first RO or the at least one RO group at the first time domain position; or
the first threshold is a quantity of SSB beams that are used by the network device to receive a preamble at the first time domain position; or
the first threshold is predefined; or
the first threshold is configured by the network device.

3. The method according to claim 1 or 2, wherein an RO belonging to a third RO group is comprised between two ROs in time domain in ROs comprised in a second RO group in the at least one RO group, the second RO group corresponds to a first SSB, and the third RO group corresponds to a second SSB; or
no RO in another RO group exists between ROs comprised in any RO group in the at least one RO group.

4. The method according to any one of claims 1 to 3, wherein ROs comprised in a fourth RO group and a fifth RO group are the same, and the fourth RO group and the fifth RO group correspond to a same repetition number of preambles and correspond to different SSBs.

5. The method according to any one of claims 1 to 4, wherein at least one same RO exists in ROs comprised in a sixth RO group and ROs comprised in a seventh RO group in the at least one RO group, and a quantity of ROs comprised in the sixth RO group is different from a quantity of ROs comprised in the seventh RO group.

6. A communication method, comprising:
determining first information, wherein the first information indicates a time-frequency position of a first physical random access channel PRACH resource, the first PRACH resource comprises at least one random access channel occasion RO group, the at least one RO group is for transmitting a preamble with repetitions, any RO in the at least one RO group is an RO that is capable of being used to transmit a preamble, a quantity of ROs comprised in any RO group in the at least one RO group is equal to one of repetition numbers configured by a network device, SSBs associated with all ROs in any RO group in the at least one RO group are the same, a quantity of synchronization signal and physical broadcast channel block SSB indexes comprised in a union set of a first index set corresponding to the at least one RO group and a second index set corresponding to a first RO is less than or equal to a first threshold, the first index set is an SSB index associated with an RO that is at a first time domain position and that is in the at least one RO group, the second index set is an SSB index associated with the first RO at the first time domain position, and the first RO is an RO used to transmit a preamble without repetitions; and
sending the first information to a terminal device.

7. The method according to claim 6, wherein the first threshold is a quantity of SSBs corresponding to the first RO or the at least one RO group at the first time domain position; or
the first threshold is a quantity of SSB beams that are used by the network device to receive a preamble at the first time domain position; or
the first threshold is predefined; or
the first threshold is configured by the network device.

8. The method according to claim 6 or 7, wherein ROs comprised in a fourth RO group and a fifth RO group are the same, and the fourth RO group and the fifth RO group correspond to a same repetition number of preambles and correspond to different SSBs.

9. The method according to any one of claims 6 to 8, wherein at least one same RO exists in ROs comprised in a sixth RO group and ROs comprised in a seventh RO group in the at least one RO group, and a quantity of ROs comprised in the sixth RO group is different from a quantity of ROs comprised in the seventh RO group.

10. A communication method, comprising:
receiving, by a terminal device, first information from a network device, wherein the first information indicates a time-frequency position of a first physical random access channel PRACH resource, the first PRACH resource comprises at least one random access channel occasion RO group, the at least one RO group is for transmitting a preamble with repetitions, and any RO in the at least one RO group is an RO that is capable of being used to transmit a preamble;
determining, by the terminal device, a valid RO group in the at least one RO group based on a first transmission number, a first proportion, or a first quantity that corresponds to any RO group in the at least one RO group, wherein the first transmission number is equal to a quantity of ROs that are capable of actually transmitting a preamble and that are in any RO group in the at least one RO group, the first proportion is a proportion of a second RO in one RO group, the first quantity is a quantity of second ROs in one RO group, and the second RO is an RO that is actually not used to transmit a preamble; and
determining, by the terminal device, a target RO group from the valid RO group, and transmitting a preamble with repetitions based on the target RO group.

11. The method according to claim 10, wherein determining, by the terminal device, the valid RO group in the at least one RO group based on the first transmission number, the first proportion, or the first quantity that corresponds to any RO group in the at least one RO group comprises:
determining, by the terminal device, an RO group in which a first transmission number is greater than or equal to a first number threshold in the at least one RO group as the valid RO group; or
determining, by the terminal device, an RO group in which a proportion of the second RO in the RO group is less than or equal to the first proportion as the valid RO group; or
determining, by the terminal device, an RO group in which a proportion of an RO that is capable of actually transmitting a preamble in the RO group is greater than or equal to a second proportion as the valid RO group, wherein the second proportion is equal to 1 minus the first proportion; or
determining, by the terminal device, an RO group in which a quantity of second ROs in the RO group is less than or equal to the first quantity as the valid RO group.

12. The method according to claim 11, wherein the first number threshold is less than or equal to a first repetition number of a preamble of the terminal device, and the first repetition number is any one of a plurality of repetition numbers configured by the network device.

13. The method according to any one of claims 10 to 12, wherein when an actual transmission number of an eighth RO group is less than a second number threshold and is greater than or equal to a third number threshold, the eighth RO group is not capable of being used by the terminal device to transmit a preamble with repetitions for a second repetition number, but is capable of being used by the terminal device to transmit a preamble with repetitions for a third repetition number, wherein
the second number threshold is less than or equal to the second repetition number, the third number threshold is less than or equal to the third repetition number, the second repetition number is greater than the third repetition number, the second repetition number is one of the plurality of repetition numbers configured by the network device, and the third repetition number is one of the plurality of repetition numbers configured by the network device.

14. The method according to any one of claims 10 to 13, wherein an RO belonging to a third RO group is comprised between two ROs in time domain in ROs comprised in a second RO group in the at least one RO group, the second RO group corresponds to a first SSB, and the third RO group corresponds to a second SSB; or
no RO in another RO group exists between ROs comprised in any RO group in the at least one RO group.

15. The method according to any one of claims 10 to 14, wherein ROs comprised in a fourth RO group and a fifth RO group are the same, and the fourth RO group and the fifth RO group correspond to a same repetition number of preambles and correspond to different SSBs.

16. The method according to any one of claims 10 to 15, wherein at least one same RO exists in ROs comprised in a sixth RO group and ROs comprised in a seventh RO group in the at least one RO group, and a quantity of ROs comprised in the sixth RO group is different from a quantity of ROs comprised in the seventh RO group.

17. The method according to any one of claims 10 to 16, wherein a quantity of ROs comprised in the target RO group is greater than or equal to a repetition number that is of a preamble and that is currently calculated by the terminal device; or
when the terminal device transmits a preamble with repetitions in the target RO group at power less than or equal to maximum transmission power, receive power of the preamble is greater than or equal to a first power threshold.

18. A communication method, comprising:
determining, by a network device, first information, wherein the first information indicates a time-frequency position of a first physical random access channel PRACH resource, the first PRACH resource comprises at least one random access channel occasion RO group, the at least one RO group is for transmitting a preamble with repetitions, and any RO in the at least one RO group is an RO that is capable of being used to transmit a preamble;
sending, by the network device, the first information to the terminal device;
determining, by the network device, a valid RO group in the at least one RO group based on a first transmission number, a first proportion, or a first quantity that corresponds to any RO group in the at least one RO group, wherein the first transmission number is equal to a quantity of ROs that are capable of actually transmitting a preamble and that are in any RO group in the at least one RO group, the first proportion is a proportion of a second RO in one RO group, the first quantity is a quantity of second ROs in one RO group, and the second RO is an RO that is actually not used to transmit a preamble; and
detecting, by the network device, a preamble on the valid RO group.

19. The method according to claim 18, wherein determining, by the network device, the valid RO group in the at least one RO group based on the first transmission number, the first proportion, or the first quantity that corresponds to any RO group in the at least one RO group comprises:
determining, by the network device, an RO group in which a first transmission number is greater than or equal to a first number threshold in the at least one RO group as the valid RO group; or
determining, by the network device, an RO group in which a proportion of the second RO in the RO group is less than or equal to the first proportion as the valid RO group; or
determining, by the network device, an RO group in which a proportion of an RO that is capable of actually transmitting a preamble in the RO group is greater than or equal to a second proportion as the valid RO group, wherein the second proportion is equal to 1 minus the first proportion; or
determining, by the network device, an RO group in which a quantity of second ROs in the RO group is less than or equal to the first quantity as the valid RO group.

20. The method according to claim 19, wherein the first number threshold is less than or equal to a first repetition number of a preamble of the terminal device, and the first repetition number is any one of a plurality of repetition numbers configured by the network device.

21. The method according to any one of claims 18 to 20, wherein when an actual transmission number of an eighth RO group is less than a second number threshold and is greater than or equal to a third number threshold, the eighth RO group is not capable of being used by the terminal device to transmit a preamble with repetitions for a second repetition number, but is capable of being used by the terminal device to transmit a preamble with repetitions for a third repetition number, wherein
the second number threshold is less than or equal to the second repetition number, the third number threshold is less than or equal to the third repetition number, the second repetition number is greater than the third repetition number, the second repetition number is one of the plurality of repetition numbers configured by the network device, and the third repetition number is one of the plurality of repetition numbers configured by the network device.

22. The method according to any one of claims 18 to 21, wherein an RO belonging to a third RO group is comprised between two ROs in time domain in ROs comprised in a second RO group in the at least one RO group, the second RO group corresponds to a first SSB, and the third RO group corresponds to a second SSB; or
no RO in another RO group exists between ROs comprised in any RO group in the at least one RO group.

23. The method according to any one of claims 18 to 22, wherein ROs comprised in a fourth RO group and a fifth RO group are the same, and the fourth RO group and the fifth RO group correspond to a same repetition number of preambles and correspond to different SSBs.

24. The method according to any one of claims 18 to 23, wherein at least one same RO exists in ROs comprised in a sixth RO group and ROs comprised in a seventh RO group in the at least one RO group, and a quantity of ROs comprised in the sixth RO group is different from a quantity of ROs comprised in the seventh RO group.

25. A communication apparatus, comprising a memory, a processor, and a transceiver, wherein
the memory is configured to store computer instructions;
the transceiver is configured to receive and send a signal; and
the processor is coupled to the memory, and is configured to invoke the computer instructions in the memory, to perform the method according to any one of claims 1 to 5 by using the transceiver, or perform the method according to any one of claims 10 to 17 by using the transceiver.

26. A communication apparatus, comprising a memory, a processor, and a transceiver, wherein
the memory is configured to store computer instructions;
the transceiver is configured to receive and send a signal; and
the processor is coupled to the memory, and is configured to invoke the computer instructions in the memory, to perform the method according to any one of claims 6 to 9 by using the transceiver, or perform the method according to any one of claims 18 to 24 by using the transceiver.

27. A computer-readable storage medium, wherein the computer-readable storage medium stores computer-executable instructions, and when the computer-executable instructions are invoked by the computer, the method according to any one of claims 1 to 5 is performed, or the method according to any one of claims 6 to 9 is performed, or the method according to any one of claims 10 to 17 is performed, or the method according to any one of claims 18 to 24 is performed.

28. A computer program product, comprising instructions, wherein when the instructions are run on a computer, the method according to any one of claims 1 to 5, or the method according to any one of claims 6 to 9, or the method according to any one of claims 10 to 17, or the method according to any one of claims 18 to 24 is performed.

29. A chip, wherein the chip is coupled to a memory, and is configured to read and execute program instructions stored in the memory, to implement the method according to any one of claims 1 to 5, or implement the method according to any one of claims 6 to 9, or implement the method according to any one of claims 10 to 17, or implement the method according to any one of claims 18 to 24.
